# EUROPÄISCHE PATENTSCHRIFT

(11) **EP 4 313 488 B1**
(45) Veröffentlichungstag und Bekanntmachung des Hinweises auf die Patenterteilung: **07.05.2025**
(21) Anmeldenummer: 22717572.6
(22) Anmeldetag: 22.03.2022
(51) Int. Cl.: B25B 1/02, B25B 1/18, B25B 5/02, B25B 5/06, B25B 5/16, B25J 15/02, B25J 15/08

(54) **FESTSETZEINRICHTUNG EINER GREIF- ODER SPANNVORRICHTUNG**
LOCKING DEVICE FOR A GRIPPING OR CLAMPING APPARATUS
SYSTÈME D'IMMOBILISATION D'UN DISPOSITIF DE PRÉHENSION OU DE SERRAGE

(30) Priorität: 31.03.2021 DE 102021108259
(43) Veröffentlichungstag der Anmeldung: 07.02.2024
(73) Patentinhaber: SCHUNK SE & Co. KG Spanntechnik Greiftechnik Automatisierungstechnik, 74348 Lauffen am Neckar (DE)
(72) Erfinder: FRANZ, Michael, 74360 Ilsfeld (DE); HABERZETTL, Ingo, 74211 Leingarte (DE); KUNZ, Gregory, 74354 Besigheim (DE); LAYHER, Daniel, 71737 Kirchberg an der Murr (DE); SCHLEUSENER, Tobias, 75031 Eppingen (DE)
(74) Vertreter: DREISS Patentanwälte PartG mbB
(86) Internationale Anmeldenummer: PCT/EP2022/057530
(87) Internationale Veröffentlichungsnummer: WO 2022/207414

(56) Entgegenhaltungen:
- DE-A1- 102005 060 511
- DE-A1- 102013 211 528
- DE-A1- 102017 124 720
- DE-A1- 102019 103 916

## Beschreibung

Die Erfindung betrifft eine Festsetzeinrichtung einer zwei aufeinander zu und voneinander weg verfahrbaren Grundbacken aufweisenden Greif- oder Spannvorrichtung, mit einem mit den Grundbacken bewegungsgekoppelten oder bewegungskoppelbaren, um eine Drehachse drehbar angeordneten Koppelglied, wobei das Koppelglied an seiner Mantelfläche einen Bremsabschnitt aufweist, und mit wenigstens einem Bremselement, das zum Festsezten des Koppelglieds aus einer Freigabelage entlang einer senkrecht zur Drehachse verlaufenden Festsetzrichtung in eine Festsetzlage verlagerbar ist. Die Erfindung betrifft auch eine Greif- oder Spannvorrichtung mit einer solchen Festsetzeinrichtung.

Aus der DE 10 2019 103 916 A1 sind verschiedene Arten von Festsetzeinrichtungen bekannt. In den Figuren 12a und 12b ist eine Festsetzeinrichtung dargestellt, die Merkmale des Oberbegriffs des Anspruchs 1 zeigt. Dort sind zwei einander gegenüberliegende Bremselemente in Form von Bremsbacken vorgesehen, die gegen einen von der Mantelfläche einer Bremsscheibe gebildet Bremsabschnitt wirken. Die Bremsbacken sind entlang einer gemeinsamen Linie, die senkrecht zur Drehachse und die Drehachse schneidend - also radial zum Bremsabschnitt - verläuft, aus der Freigabelage in die Festsetzlage entlang der Festsetzrichtung verlagerbar.

Aus der DE 10 2017 124 720 A1 ist eine andere Festsetzeinrichtung für eine Greif- oder Spannvorrichtung bekannt.

Greif- oder Spannvorrichtungen ohne eine Brems- und/oder Festsetzeinheit sind beispielsweise bekannt aus der DE 100 13 022 C2 oder DE 101 38 685 C1.

Ferner ist aus der DE 2011 084 177 A1 bekannt, ein Dämpfungselement zwischen dem Antrieb der Greifbacke und der Greifbacke vorzusehen. Aus der DE 10 2013 211 528 A1 ist bekannt, ein elastisches Federelement zur Greifkrafterhaltung vorzusehen.

Aus der DE 10 2019 118 672 B3 ist eine Greif- oder Spanneinheit mit Getriebeanordnung zur Aufrechterhaltung einer Greifkraft bekannt. Dabei wird die Aufrechterhaltung der Greifkraft durch Spannen einer Feder über den Verfahrweg der Greifbacken realisiert, wobei ohne ein gespanntes/gegriffenes Objekt keine Festsetzung der Greifbacken möglich ist.

Aus der DE 10 2005 060511 A1 ist eine Festsetzeinrichtung nach dem Oberbegriff von Anspruch 1 bekannt.

Der Erfindung liegt die Aufgabe zugrunde, eine Festsetzeinrichtung und eine zugehörige Greif- oder Spanneinheit bereitzustellen, die kompakt baut und mit der auf einfache Art und Weise die Backen funktionssicher abbremsbar und festsetzbar sind.

Diese Aufgabe wird gelöst durch eine Festsetzeinrichtung mit den Merkmalen des Patentanspruchs 1.

Folglich ist insbesondere vorgesehen, dass das Bremselement beim Verlagern in die Festsetzlage tangential am Bremsabschnitt angreift. Durch das tangentiale Angreifen verläuft die Festsetzrichtung entlang einer Geraden, die zur Drehachse vorzugsweise wenigstens um den Radius des Bremsabschnitts beabstandet ist. Anders als beim bekannten Stand der Technik gemäß der DE 10 2019 103 916 A1 wirkt das Bremselement nicht radial gegen den Bremsabschnitt, sondern tangential. Hierdurch kann zum einen eine in Festsetzeinrichtung kompakt bauende Festsetzeinrichtung realisiert werden, da das Bremselement tangential, also seitlich am Koppelglied bzw. dessen Bremsabschnitt angreift. Außerdem kann - anders als bei der aus dem Stand der Technik bekannten Ausführungsform - das Bremselement auch noch bei oder während des Zusammenwirkens mit dem Bremsabschnitt wenigstens bedingt in die Festsetzeinrichtung bewegt werden.

Dabei ist vorteilhaft, wenn der Bremsabschnitt als Ritzel ausgebildet ist und wenn das Bremselement einen in der Festsetzlage mit dem Ritzel zusammenwirkenden Zahnstangenabschnitt aufweist, der tangential am Ritzel angreift. Ein solcher Zahnstangenabschnitt weist zumindest einen Zahn mit einem Zahnkopf auf, der in der Freigabelage das Ritzel freigibt und in der Festsetzlage mit dem Ritzel zusammenwirkt, so dass dieses, und damit auch das Koppelglied, festgesetzt wird. Denkbar ist, dass der Zahnstangenabschnitt auch zwei oder mehr Zähne vorsieht. Insbesondere durch Vorsehen des Ritzels und der Zahnstange kann ein formschlüssiges Festsetzen des Ritzels, und damit des Koppelglieds, erreicht werden.

Besonders vorteilhaft hat sich herausgestellt, wenn zwei Zahnstangenabschnitte vorgesehen sind und wenn das Ritzel eine ungerade Zähnezahl aufweist, die so gewählt ist, dass jeweils nur Zähne einer der beiden Zahnstangen auf je einen Zahnkopf des Ritzels auftreffen können. Dadurch kann gewährleistet werden, dass in jeder Position des Ritzels ein formschlüssiger Eingriff der einen oder anderen Zahnstange zwischen zwei Zähnen des Ritzels ermöglicht ist. Sollte die Drehstellung des Ritzels so sein, dass eine der beiden Zahnstangen auf einen Zahnkopf des Ritzels trifft, und somit nicht formschlüssig in das Ritzel eingreifen kann, kann die andere der beiden Zahnstangen formschlüssig in das Ritzel eingreifen und dieses festsetzen. Vorteilhafterweise ist die Ausbildung weiter derart, dass die Zahnstange, die in das Ritzel eingreift, das Ritzel wenigstens so weit verdreht, dass auch die andere Zahnstange zwischen zwei Zähne des Ritzels eingreifen kann, so dass letztlich beide Zahnstangen das Ritzel, und damit das Koppelglied, festsetzen.

Ferner ist vorteilhaft, wenn der Bremsabschnitt als Kreiszylindermantelfläche ausgebildet ist und wenn das Bremselement in der Festsetzlage tangential an der Kreiszylindermantelfläche angreift. Je nach Wahl von geeigneten Materialien ergeben sich geeignete Reibungskoeffiziente, die ein sicheres Festsetzen in der Festsetzlage bewirken. Insbesondere kann hierdurch ein kraft- und/oder reibschlüssiges Festsetzen des Koppelglieds erreicht werden.

Das Bremselement kann dabei vorzugsweise als Keilfinger ausgebildet sein, der eine schräg zur Festsetzrichtung verlaufende, in der Festsetzlage tangential gegen den Bremsabschnitt wirkende Keilfläche aufweist. Durch Vorsehen der Keilfläche und durch Wahl eines geeigneten Keilwinkels kann eine Kraftverstärkung beim Verlagern des Keilfingers in die Festsetzlage erreicht werden.

Ferner ist denkbar, dass das Bremselement als Keilgabel mit zwei zur Festsetzrichtung schräg verlaufenden, in der Festsetzlage tangential gegen den Bremsabschnitt wirkenden Keilflächen ausgebildet ist. Eine derartige Keilgabel umfasst folglich zwei Keilfinger, die synchron in die jeweilige Festsetzlage verlagert werden. Beide Keilflächen der Keilgabel greifen dann insbesondere symmetrisch und tangential am Bremsabschnitt an. Dadurch kann eine höhere Festsetzkraft erreicht werden, als bei Vorsehen lediglich eines Keilfingers.

Ferner ist denkbar, dass das Bremselement als Keilgabel mit zwei zur Festsetzrichtung schräg verlaufenden, in der Festsetzlage tangential gegen den Bremsabschnitt wirkenden Keilflächen ausgebildet ist. Eine derartige Keilgabel umfasst folglich zwei Keilfinger, die synchron in die jeweilige Festsetzlage verlagert werden. Beide Keilflächen der Keilgabel greifen dann insbesondere symmetrisch und tangential am Bremsabschnitt an. Dadurch kann eine höhere Festsetzkraft erreicht werden, als bei Vorsehen lediglich eines Keilfingers.

Ferner hat sich als vorteilhaft herausgestellt, wenn die Keilflächen so ausgebildet sind, dass sie beim Angreifen am Bremsabschnitt und beim weiteren Bewegen entlang der Festsetzrichtung in die endgültige Festsetzlage elastisch nachgiebig ausgelenkt werden. Hierdurch kann ein Anliegen der Keilflächen am Bremselement unter Vorspannung erreicht werden, so dass auch bei Vorhandensein von Fertigungstoleranzen ein sicheres Festsetzen des Koppelglieds bewirkt werden kann.

Dabei ist vorteilhaft, wenn auf der der jeweiligen Keilfläche abgewandten Seite des Keilfingers bzw. der Keilgabel wenigstens eine Aussparung zur Realisierung eines Festkörpergelenks vorgesehen ist. Die Aussparung kann dabei geometrisch so ausgebildet sein, dass die gewünschte elastische Nachgiebigkeit zum Festsetzen des Koppelglieds durch das mit der Aussparung gebildete Festkörpergelenk erreicht wird.

Weiterhin ist vorteilhaft, wenn zwei Bremselemente vorgesehen sind, die zur Drehachse punktsymmetrisch oder zu einer senkrecht zur Festsetzrichtung verlaufenden Ebene spiegelsymmetrisch angeordnet sind. Durch eine derart symmetrische Anordnung kann ein sicheres Festsetzen des Koppelglieds unter Beanspruchung von minimalem Bauraum erreicht werden.

Die erfindungsgemäße Festsetzeinrichtung sieht weiter vorteilhafterweise vor, dass wenigstens ein Bremskolben und wenigstens ein mit dem Bremskolben zusammenwirkendes Federelement vorgesehen sind, wobei die Verlagerung des Bremselements aus der Freigabelage in die Festsetzlage aufgrund der Federkraft des Federelements erfolgt, und wobei der Bremskolben einen Druckraum derart begrenzt, dass bei Druckbeaufschlagung des Druckraums das Bremselement aus der Festsetzlage entgegen der Federkraft des Federelements in die Freigabelage gedrängt wird. Zur besseren Ausnutzung des Bauraums kann ferner vorgesehen sein, dass der wenigstens eine Bremskolben seitlich neben dem Koppelglied, parallel zur Drehachse, verlagerbar angeordnet ist.

In diesem Zusammenhang hat sich als vorteilhaft herausgestellt, wenn auf einer Kolbenstange ein erster, kleinerer Bremskolben und ein zweiter, größerer Bremskolben angeordnet sind, die jeweils einen Druckraum begrenzen, wobei der größere Bremskolben dem Federelement zugewandt und der kleinere Bremskolben dem Federelement abgewandt ist, und wobei zwischen den Bremskolben eine den Druckraum des größeren Bremskolbens begrenzende Zwischenwand vorgesehen ist. Die beiden Druckräume sind vorzugsweise miteinander druckverbunden. Hierdurch kann eine Kraftverstärkung zur Betätigung des jeweiligen Bremselements erreicht werden, da zwei Bremskolben mit entsprechender Wirkfläche zur Bereitstellung der Verlagerung des jeweiligen Bremselements in die Festsetzlage und letztlich der Bremskraft zur Verfügung stehen.

In diesem Zusammenhang ist vorteilhaft, wenn sich die Zwischenwand auf der dem größeren Kolben abgewandten Seite an einem Gehäuseanschlag abstützt. Ein derartiger Gehäuseanschlag kann als umlaufende Gehäuseschulter ausgebildet sein. Bei Druckbeaufschlagung der jeweiligen Druckräume wird die Zwischenwand dann gegen den Gehäuseanschlag gedrängt, so dass sie sich hier abstützen kann. Bei Druckverlust und bei Beaufschlagung des insbesondere größeren Bremskolbens mit der Federkraft wird die Zwischenwand ebenfalls in den Gehäuseanschlag beaufschlagt. Die Zwischenwand kann vorteilhafterweise eine abgedichtete Ausnehmung zur Durchführung der Kolbenstange vorsehen. Aufgrund einer solchen Anordnung der Zwischenwand können Befestigungsmittel der Zwischenwand als solcher im Wesentlichen entfallen, wodurch sich ein vergleichsweise einfacher Aufbau ergibt.

Die eingangs genannte Aufgabe wird auch gelöst durch eine Greif- oder Spannvorrichtung, die eine erfindungsgemäße Festsetzeinrichtung umfasst. Die Festsetzeinrichtung kann dabei als Anbaumodul an die Greif- oder Spannvorrichtung angebaut sein oder in die Greif- oder Spannvorrichtung integriert sein.

Die erfindungsgemäße Greif- oder Spannvorrichtung kann zudem vorsehen, dass zwei aufeinander zu und voneinander weg verfahrbare Grundbacken vorgesehen sind, wobei die Grundbacken jeweils mit wenigstens einem einen Arbeitsdruckraum begrenzenden Arbeitskolben bewegungsgekoppelt sind, wobei die Arbeitskolben jeweils einen Koppelabschnitt vorsehen, der mit einem um eine Drehachse drehbar angeordneten Koppelglied bewegungsgekoppelt ist, wobei das Koppelglied der Greif- oder Spannvorrichtung zugleich das Koppelglied der Festsetzeinrichtung bildet oder mit diesem drehgekoppelt ist. Mit einer derartigen Greif- oder Spannvorrichtung werden folglich die Grundbacken pneumatisch über die Arbeitskolben angetrieben. Durch Vorsehen des Koppelglieds kann die Bewegung der Arbeitskolben mittels der Festsetzeinrichtung festgesetzt werden.

Dies hat weiterhin den Vorteil, dass das die Position des Bremsabschnitts in der Festsetzlage gehalten wird und folglich auch die Position der Greifbacken der Greifeinrichtung unabhängig eines gegriffenen Objekts festgesetzt werden können. Dadurch wird auch ein Zuschnappen der Backen verhindert, was die Gebrauchssicherheit der Greifeinrichtung steigert. Wenn ein gegriffenes Objekt in der Festsetzlage der Festsetzeinrichtung an der Greifeinrichtung entfernt wird, birgt das Zuschnappen der Greifbacken ein Verletzungsrisiko, wie es im Stand der Technik in der DE 10 2019 118 672 B3 der Fall ist.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1: einen Längsschnitt durch eine erfindungsgemäße Festsetzeinrichtung, die an einer Greifvorrichtung vorgesehen ist;
- Figur 2: einen Querschnitt durch die Festsetzeinrichtung gemäß Figur 1;
- Figur 3: eine vergrößerte Darstellung des in Figur 2 gezeigten Ritzels;
- Figur 4: einen der Figur 1 entsprechenden Längsschnitt durch eine zweite erfindungsgemäße Festsetzeinrichtung;
- Figur 5: einen Querschnitt durch die Festsetzeinrichtung gemäß Figur 3;
- Figur 6: eine vergrößerte Darstellung des Ausschnitts VI in Figur 5;
- Figur 7: einen der Figur 1 entsprechenden Längsschnitt durch eine dritte erfindungsgemäße Festsetzeinrichtung; und

Figur 8 einen Querschnitt durch die in Figur 5 gezeigte Festsetzeinrichtung.

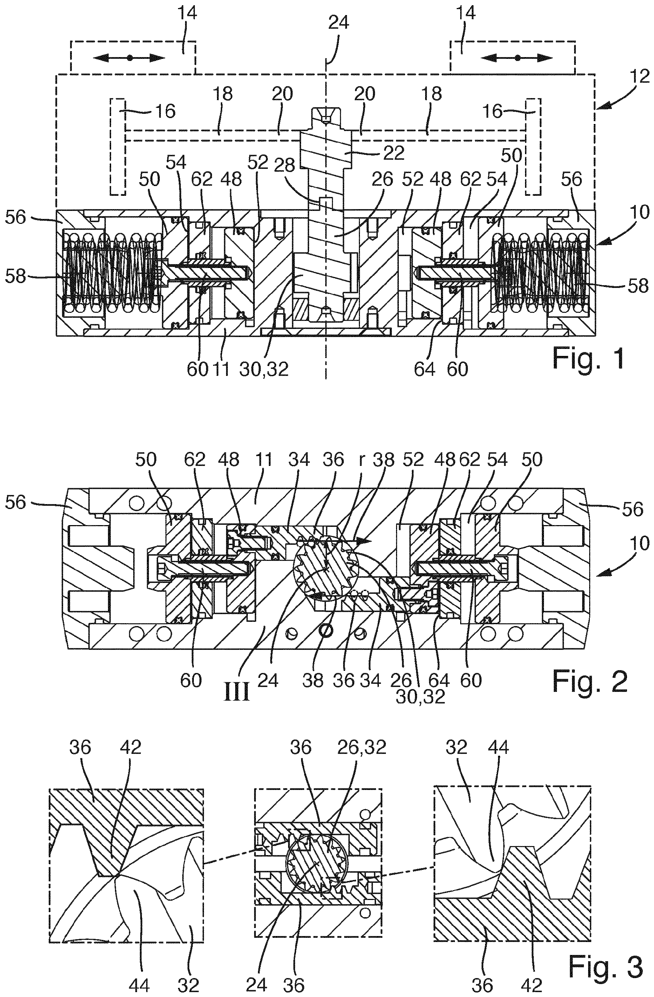

In der Figur 1 ist eine Festsetzeinrichtung 10 gezeigt, die an einer Greifvorrichtung 12 angeordnet ist. Die Greifvorrichtung 12 ist lediglich schematisch dargestellt und weist zwei aufeinander zu und voneinander weg verfahrbare Grundbacken 14 auf. Ferner weist die Greifvorrichtung 12 ein mit den Grundbacken 14 bewegungsgekoppeltes, um eine Drehachse 24 drehbar angeordnetes Koppelglied 22 auf. In der Figur 1 sind in der Greifvorrichtung 12 zwei Arbeitskolben 16 angedeutet, die jeweils mit einer der Grundbacken 14 bewegungsgekoppelt sind. Ein Verfahren der Arbeitskolben 16 hat folglich ein Verfahren der Grundbacken 14 zur Folge. Die Arbeitskolben 16, bzw. deren Kolbenstangen 18, sehen jeweils einen Koppelabschnitt 20 vor, der mit einem um die Drehachse 24 drehbar angeordneten Koppelglied 22bewegungsgekoppelt ist. Ein Aufeinander-zu- bzw. Voneinander-weg-Bewegen der Kolben 16 führt folglich zu einer Drehbewegung des Koppelglieds 22 um die Achse 24. Über das Koppelglied 22 werden damit auch die Bewegungen der beiden Arbeitskolben 16, und damit die Bewegungen der Grundbacken 14, synchronisiert.

Das Koppelglied 22 kann dabei in dem Bereich, in dem es mit den Koppelabschnitten 20 zusammenwirkt, als Ritzel ausgebildet sein. Die Kolbenabschnitte 20 der Kolbenstangen 18 können dann als das Ritzel kämmende Zahnstangen ausgebildet sein.

Die in der Figur 1 gezeigte Greifvorrichtung kann dabei insbesondere der in der DE 10 2019 103 916 A1, in den Figuren 1 bis 6, gezeigten Greifvorrichtungen entsprechen. Zu weiteren Einzelheiten und Funktionsweisen der Greifvorrichtung 12 wird insofern auf die Figuren 1 bis 6 mit zugehöriger Beschreibung des genannten Dokuments verwiesen.

Wie aus dem Schnitt gemäß Figur 1 deutlich wird, ist die Festsetzeinrichtung 10 als Anbaumodul ausgebildet, das an die Greifvorrichtung 12 angebaut werden kann. Dies hat den Vorteil, dass die Greifvorrichtung 12 auch ohne die Festsetzeinrichtung 10 betreibbar ist.

Aus dem Schnitt gemäß Figur 1 wird deutlich, dass die Festsetzeinrichtung 10 ein in ihrem Gehäuse 11 drehbar gelagertes, eigenes Koppelglied 26 aufweist, welches über einen Kupplungsabschnitt 28 mit dem Koppelglied 22 der Greifvorrichtung 12 drehgekoppelt ist. In diesem Zusammenhang ist denkbar, dass anstelle von zwei einzelnen Koppelgliedern 22, 26 auch ein gemeinsames Koppelglied Verwendung finden kann, das insbesondere einteilig bzw. einstückig ausgebildet ist.

Das Koppelglied 26 der Festsetzeinrichtung 10 weist an seiner Mantelfläche einen Bremsabschnitt 30 auf, der bei der Ausführungsform gemäß Figur 1 und 2 als Ritzel 32 ausgebildet ist. Zum Festsetzen des Bremsabschnitts 30 bzw. des Ritzels 32 sind, wie aus Figur 1 und 2 deutlich wird, zwei Bremselemente 34 vorgesehen. Bei der Ausführungsform gemäß Figur 1 und 2 weisen die Bremselemente 34 je einen Zahnstangenabschnitt 36 mit Zähnen 42 auf, die dazu vorgesehen sind, mit dem Ritzel 32 zusammenzuwirken und dieses in seiner Position festzusetzen. Die Bremselemente 34 sind dabei zwischen einer zurückgezogenen Freigabelage entlang einer senkrecht zur Drehachse 24 verlaufenden Festsetzrichtung 38 in eine Festsetzlage verlagerbar.

Die Zahnstangenabschnitte 36 greifen dabei in der Festsetzlage tangential am Bremsabschnitt 30 bzw. am Ritzel 32 an. Wie aus Figur 2 deutlich wird, verlaufen die Festsetzrichtungen 38 jeweils entlang einer Geraden, die zur Drehachse 24 um den Radius bzw. den Teilkreisradius r des Ritzels 32 beabstandet ist. Zur Veranschaulichung befindet sich in der linken Hälfte der Figuren 1 und 2 das linke Bremselement 34 in der Festsetzlage; in der rechten Hälfte der Figuren 1 und 2 befindet sich das rechte Bremselement 34 in der Freigabelage.

Das Ritzel 32 weist eine ungerade Zahl von Zähnen 44 auf. Dies hat, wie aus Figur 3 deutlich wird, den Vorteil, dass beim Verlagern der Bremselemente 34 in die Festsetzlage, wenn überhaupt, nur ein Zahn 42 einer Zahnstange 36 auf einen Zahnkopf eines Zahns 44 des Ritzels 32 trifft (Figur 3, linkes Bild). Dadurch kann gewährleistet werden, dass stets einer der beiden Zahnstangenabschnitte 36 in Eingriff mit dem Ritzel 32 kommt, um dieses bzw. das Koppelglied 26, und damit letztlich die Grundbacken 14, festzusetzen (Figur 3, rechtes Bild).

Wie weiter aus Figur 2 deutlich wird, sind die beiden Bremselemente 34 zur Drehachse 24 symmetrisch angeordnet. Dies bringt den Vorteil, dass beide Bremselemente 34 symmetrisch am Bremsabschnitt 30 angreifen.

Die Bremselemente 34 sind jeweils mit zwei Bremskolben 48, 50 bewegungsgekoppelt. Die Bremskolben 48, 50 begrenzen jeweils einen Druckraum 52, 54, die so angeordnet sind, dass bei Druckbeaufschlagung der Druckräume 52, 54 die Kolben 48, 50 in der vom Ritzel 26 abgewandten Richtung bewegt und damit die Bremselemente 34 in ihre Freigabelage verlagert werden. In der Figur 1 sind jeweils zwischen dem Bremskolben 50 und einem Gehäusedeckel 56 Federelemente 58 vorgesehen, die den Bremskolben 50 hin zum Ritzel 32, und damit das Bremselement 34 in die Festsetzlage drängen (in Figur 2 sind die Federelemente 58 der Übersichtlichkeit halber nicht dargestellt). Findet ein Druckabfall in den Druckräumen 52, 54 statt, so werden die Bremskolben 48 und 50, und damit das jeweilige Bremselement 34, von den Federelementen 58 in die Festsetzlage, wie es in der linken Hälfte der Festsetzeinrichtung in Figur 1 und 2 gezeigt ist, in die Festsetzlage bewegt. Bei ausreichender Druckbeaufschlagung der Druckräume 52, 54 werden die beiden Kolben 48, 50, wie es in der rechten Hälfte der Figuren 1 und 2 gezeigt ist, und damit das jeweilige Bremselement 34, aus der Festsetzlage in die Freigabelage gedrängt. Die Druckräume 52, 54 sind dabei mit der gleichen Druckquelle verbunden wir die Druckräume, die von den Antriebskolben 16 begrenzt werden; bei einem insbesondere ungewollten Druckabfall werden die Bremselemente 34 von den Federelementen 58 in die Festsetzlage gedrängt und die Greifbacken 14 werden festgesetzt.

Die jeweils beiden zusammengehörigen Bremskolben 48 und 50 sind über eine Kolbenstange 60 miteinander verbunden. Ferner ist zwischen den jeweils zusammengehörigen Bremskolben 48 und 50 eine Zwischenwand 62 in Form einer Kolbenscheibe vorgesehen. Die jeweilige Kolbenstange 60 durchgreift dabei druckabgedichtet die jeweilige Zwischenwand 62.

Die Zwischenwände 62 stützen sich jeweils auf der dem größeren Bremskolben 50 abgewandten Seite an einem Gehäuseanschlag 64 ab. Der Gehäuseanschlag ist dabei als umlaufende Ringschulter ausgebildet. Diese Ausbildung hat den Vorteil, dass die Zwischenwände 62 ohne weitere Befestigungsmittel in den Gehäuseanschlag 64 eingesetzt werden können. Bei Druckbeaufschlagung der Druckräume 52 und 54 wird aufgrund des Drucks im Druckraum 54 die jeweilige Zwischenwand 62 gegen den Gehäuseanschlag 64 gedrängt. Bei Druckabfall in den Druckräumen 52, 54 drängen die Federelemente 58 die jeweilige Zwischenwand 62 gegen den jeweiligen Gehäuseanschlag 64.

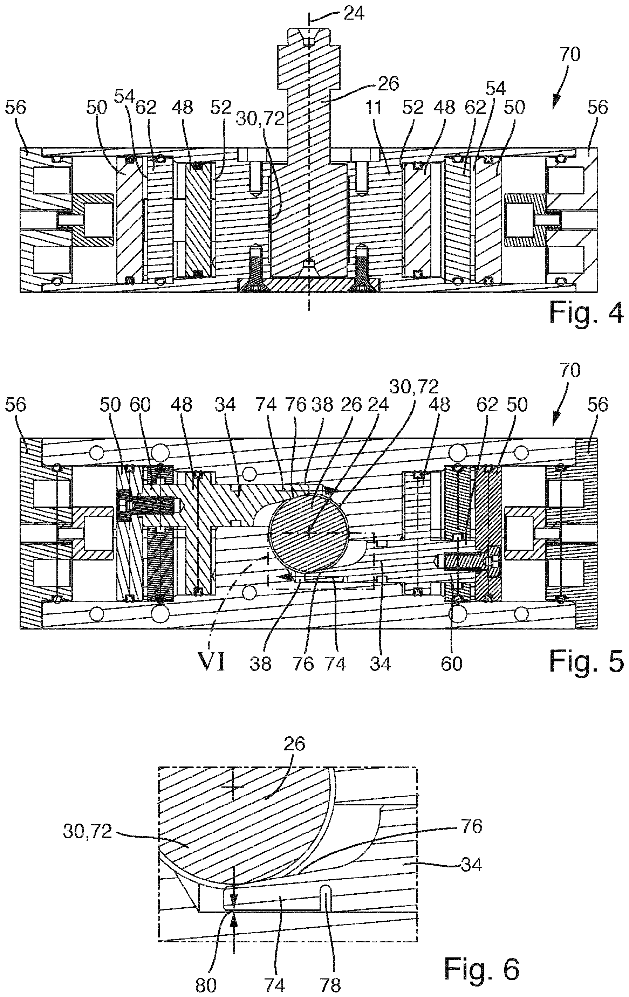

Die in der Figur 4 und 5 gezeigte Festsetzeinrichtung 70 entspricht im Wesentlichen der in der Figur 1 und 2 gezeigten Festsetzeinrichtung 10, wobei entsprechende Bauteile mit entsprechenden Bezugszeichen gekennzeichnet sind. Anders als bei der Festsetzeinrichtung 10 ist bei der Festsetzeinrichtung 70 für eine in den Figur 4 und 5 nicht gezeigte Greifvorrichtung und für die Festsetzeinrichtung 70 ein gemeinsames Koppelglied 26 vorgesehen.

Die Festsetzeinrichtung 70 unterscheidet sich ferner von der Festsetzeinrichtung 10 dadurch, dass der Bremsabschnitt 30 nicht als Ritzel, sondern als rotationssymmetrische Mantelfläche, und bei der gezeigten Ausführungsform als Kreiszylindermantelfläche 72 ausgebildet ist. Entsprechend der Figur 2 sind in den Figuren 3 und 4 Federelemente 58 zwischen den Gehäusedeckeln 56 und den jeweils außen liegenden Bremskolben 50 nicht gezeigt. Ferner sind bei der Festsetzeinrichtung 70 die Bremselemente 34 nicht als Zahnstangenabschnitte ausgebildet, sondern als Keilfinger 74. Die Keilfinger 74 weisen jeweils eine zur Festsetzrichtung 38 schräg verlaufende, mit der Festsetzrichtung 38 einen spitzen Winkel einschließende Keilfläche 76 auf. Beim Verlagern der Bremselemente 34 in Festsetzrichtung 38 greifen folglich die Keilflächen 76 der Bremselemente 34 tangential am Bremsabschnitt 30 bzw. der Kreiszylindermantelfläche 72 an.

Wie aus dem vergrößerten Ausschnitt gemäß Figur 6 deutlich wird, weisen die Keilfinger 74 auf der den Keilflächen 76 abgewandten Seite eine Aussparung 78 auf, so dass die Keilflächen 76 bzw. die Keilfinger 74 beim Angreifen am Bremsabschnitt 30 und beim weiteren Bewegen entlang der Festsetzrichtung 38 elastisch nachgiebig ausgelenkt werden. Durch Vorsehen der Aussparung 78 wird folglich eine Art Festkörpergelenk realisiert. Um ein Auslenken des freien Endes des Keilfingers 74 zu ermöglichen, ist der Abschnitt des jeweiligen Keilfingers 74, der sich zwischen dem freien Ende des Keilfingers 74 und der Aussparung 78 befindet, um das Maß 79 hin zum Bremsabschnitt 30 zurückversetzt.

Entsprechend der Festsetzeinrichtung 10 werden bei der Festsetzeinrichtung 70 bei Druckabfall des Drucks in den Druckräumen 52, 54 die beiden Bremselemente 34, bzw. deren Keilflächen 76, aufgrund der in den Figuren 4 und 5 nicht gezeigten Federelemente, aus ihrer Freigabelage entlang der Festsetzrichtung 38 in die Festsetzlage gelagert; die Keilflächen 76 greifen dabei tangential, kraftschlüssig am Koppelglied 26 bzw. dessen Bremsabschnitt 30, an.

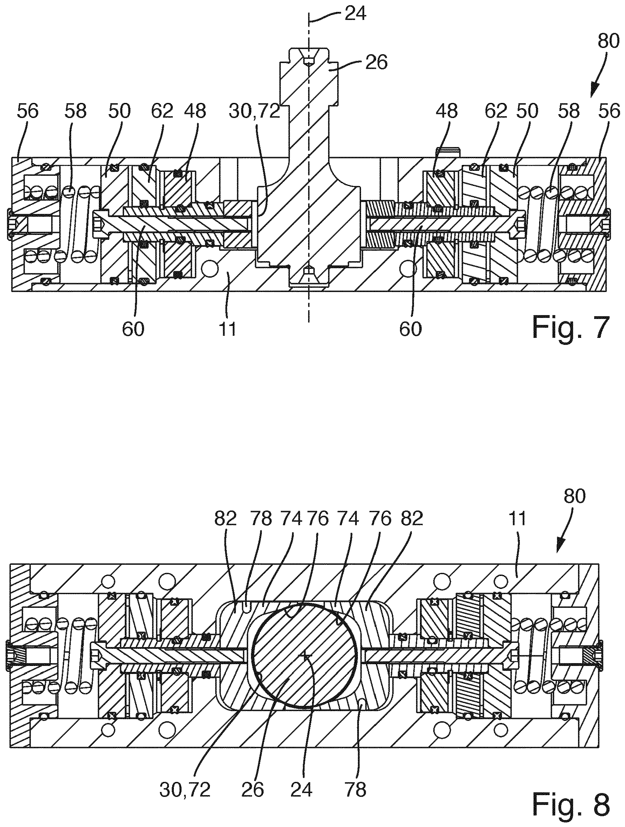

In den Figuren 7 und 8 ist eine weitere erfindungsgemäße Festsetzeinrichtung 80 gezeigt, die im Wesentlichen der Festsetzeinrichtung 70 gemäß Figur 4 und 5 entspricht, wobei entsprechende Bauteile entsprechende Bezugszeichen tragen.

Im Unterschied zur Festsetzeinrichtung 70 weist die Festsetzeinrichtung 80 als Bremselemente 34 zwei Keilgabeln 82 auf, die jeweils zwei Keilfinger 74 mit schräg zur Festsetzrichtung 38 verlaufenden Keilflächen 76 aufweisen. Die Festsetzeinrichtung 80 greift folglich nicht nur mit zwei Keilflächen 76 am Bremsabschnitt 30 an, sondern mit insgesamt vier Keilflächen 76. Hierdurch kann eine erhöhte Festsetzwirkung erzielt werden. Entsprechend der Festsetzeinrichtung 70 sind an den Keilgabeln 82, bzw. an jeweils einem Keilfinger 74 einer Keilgabel 82 Aussparungen 78 vorgesehen, um ein elastisch nachgiebiges Auslenken der jeweiligen Keilfinger 74, entsprechend der Festsetzeinrichtung 70, zu ermöglichen.

## Patentansprüche

1. Festsetzeinrichtung (10, 70, 80) einer zwei aufeinander zu und voneinander weg verfahrbaren Grundbacken (14) aufweisenden Greif- oder Spannvorrichtung (12),
mit einem mit den Grundbacken (14) bewegungsgekoppelten oder bewegungskoppelbaren, um eine Drehachse (24) drehbar angeordneten Koppelglied (26),
wobei das Koppelglied (26) an seiner Mantelfläche einen Bremsabschnitt (30) aufweist, und
mit wenigstens einem Bremselement (34), das zum Festsetzen des Koppelglieds (26) aus einer Freigabelage entlang einer senkrecht zur Drehachse (24) verlaufenden Festsetzrichtung (38) in eine Festsetzlage verlagerbar ist, **dadurch gekennzeichnet, dass** das Bremselement (34) beim Verlagern in die Festsetzlage tangential am Bremsabschnitt (30) angreift.

2. Festsetzeinrichtung (10) nach Anspruch 1, **dadurch gekennzeichnet, dass** der Bremsabschnitt (30) als Ritzel (32) ausgebildet ist und dass das Bremselement (34) einen in der Festsetzlage mit dem Ritzel (32) zusammenwirkenden Zahnstangenabschnitt (36) aufweist, der tangential am Ritzel (32) angreift.

3. Festsetzeinrichtung (10) nach Anspruch 2, **dadurch gekennzeichnet, dass** zwei Zahnstangenabschnitte (36) vorgesehen sind und dass Ritzel (32) eine ungerade Zähnezahl aufweist die so gewählt ist, dass jeweils nur einer der beiden Zahnstangenabschnitte (36) auf je einen Zahnkopf (44) des Ritzels (32) auftreffen kann.

4. Festsetzeinrichtung (70, 80) nach Anspruch 1, **dadurch gekennzeichnet, dass** der Bremsabschnitt (30) als rotationssymmetrische Mantelfläche (72) ausgebildet ist und dass das Bremselement (34) in der Festsetzlage tangential an der Mantelfläche (72) angreift.

5. Festsetzeinrichtung (10, 70, 80) nach Anspruch 1 oder 4, **dadurch gekennzeichnet, dass** das Bremselement (34) als Keilfinger (74) mit einer zur Festsetzrichtung (38) schräg verlaufenden, in der Festsetzlage tangential gegen den Bremsabschnitt (30) wirkende Keilfäche (76) ausgebildet ist.

6. Festsetzeinrichtung (70, 80) nach Anspruch 5, **dadurch gekennzeichnet, dass** das Bremselement (34) als Keilgabel (82) mit zwei zur Festsetzrichtung (38) schräg verlaufenden, in der Festsetzlage tangential gegen den Bremsabschnitt (30) wirkende Keilflächen (76) ausgebildet ist.

7. Festsetzeinrichtung (70, 80) nach einem der Ansprüche 5 oder 6, **dadurch gekennzeichnet, dass** die Keilflächen (76) so ausgebildet sind, dass sie beim Angreifen am Bremsabschnitt (30) und beim weiteren Bewegen entlang der Festsetzrichtung (38) elastisch nachgiebig ausgelenkt werden.

8. Festsetzeinrichtung (70, 80) nach Anspruch 7, **dadurch gekennzeichnet, dass** auf der der jeweiligen Keilflächen (76) abgewandten Seite eine Aussparung (78) zur Realisierung eines Festkörpergelenks aufweisen.

9. Festsetzeinrichtung (10, 70, 80) nach einem der vorhergehenden Ansprüche, **dadurch gekennzeichnet, dass** zwei Bremselemente (34) vorgesehen sind, die zur Drehachse (24) punktsymmetrisch oder zu einer senkrecht zur Festsetzrichtung verlaufenden Ebene spiegelsymmetrisch angeordnet sind.

10. Festsetzeinrichtung (10, 70, 80) nach einem der vorhergehenden Ansprüche, **dadurch gekennzeichnet, dass** wenigstens ein Bremskolben (46, 48) und wenigstens ein mit dem Bremskolben (46,48) zusammenwirkendes Federelement (58) vorgesehen sind, wobei die Verlagerung des Bremselements (34) aus der Freigabelage in die Festsetzlage aufgrund der Federkraft des Federelements (58) erfolgt, und wobei der wenigstens eine Bremskolben (46, 48) einen Druckraum (52, 54) derart begrenzt, dass bei Druckbeaufschlagung des Druckraums (52, 54) das Bremselement (34) aus der Festsetzlage entgegen der Federkraft des Federelements (70) in die Freigabelage gedrängt wird.

11. Festsetzeinrichtung (10, 70, 80) nach Anspruch 10, **dadurch gekennzeichnet, dass** auf einer Kolbenstange (60) ein erster Bremskolben (48) und ein zweiter Bremskolben (50) angeordnet sind, die jeweils einen Druckraum (52, 54) begrenzen, dass der zweite Bremskolben (50) dem Federelement (58) zugewandt und der erste Bremskolben (48) dem Federelement (58) abgewandt ist, und dass zwischen den Bremskolben (48, 50) eine den Druckraum (54) des zweiten Kolbens (50) begrenzende Zwischenwand (62) vorgesehen ist.

12. Festsetzeinrichtung (10, 70, 80) nach Anspruch 10 oder 11, **dadurch gekennzeichnet, dass** sich die Zwischenwand (62) auf der dem zweiten Bremskolben (50) abgewandten Seite an einem Gehäuseanschlag (64) abstützt.

13. Greif- oder Spannvorrichtung (12) umfassend eine Festsetzeinrichtung (10, 70, 80) nach einem der vorhergehenden Ansprüche.

14. Greif- oder Spannvorrichtung (12) nach Anspruch 13, **dadurch gekennzeichnet, dass** zwei aufeinander zu und voneinander weg verfahrbare Grundbacken (14) vorgesehen sind, wobei die Grundbacken (14) jeweils mit wenigstens einem einen Arbeitsdruckraum begrenzenden Arbeitskolben (16) bewegungsgekoppelt sind, wobei die Arbeitskolben (16) jeweils einen Koppelabschnitt (20) vorsehen, der mit einem um eine Drehachse (24) drehbar angeordneten Koppelglied (22, 26) bewegungsgekoppelt ist, wobei das Koppelglied (22) der Greif- oder Spannvorrichtung (12) zugleich das Koppelglied (26) der Festsetzeinrichtung bildet oder mit diesem drehgekoppelt ist.

## Claims

1. Locking device (10, 70, 80) of a gripping or clamping apparatus (12) having two sliding jaws (14) that can be moved toward and away from one another,
the locking device comprising a coupling member (26) which is motion-coupled or can be motion-coupled to the sliding jaws (14) and is rotatably arranged about an axis of rotation (24),
the coupling member (26) having a brake portion (30) on the lateral surface thereof, and
the locking device comprising at least one brake element (34) which can be moved from a release position in a locking direction (38) extending perpendicularly to the axis of rotation (24) into a locking position in order to lock the coupling member (26), **characterized in that** the brake element (34) engages tangentially on the brake portion (30) when it is moved into the locking position.

2. Locking device (10) according to claim 1, **characterized in that** the brake portion (30) is designed as a pinion (32) **and in that** the brake element (34) has a toothed rack portion (36) which interacts with the pinion (32) in the locking position and engages tangentially on the pinion (32).

3. Locking device (10) according to claim 2, **characterized in that** two toothed rack portions (36) are provided **and in that** the pinion (32) has an odd number of teeth which is selected such that only one of the two toothed rack portions (36) can strike one tooth head (44) of the pinion (32) in each case.

4. Locking device (70, 80) according to claim 1, **characterized in that** the brake portion (30) is designed as a rotationally symmetrical lateral surface (72) **and in that** the brake element (34) engages tangentially on the lateral surface (72) in the locking position.

5. Locking device (10, 70, 80) according to claim 1 or 4, **characterized in that** the brake element (34) is designed as a wedge finger (74) having a wedge surface (76) extending obliquely to the locking direction (38) and acting tangentially against the brake portion (30) in the locking position.

6. Locking device (70, 80) according to claim 5, **characterized in that** the brake element (34) is designed as a wedge fork (82) having two wedge surfaces (76) extending obliquely to the locking direction (38) and acting tangentially against the brake portion (30) in the locking position.

7. Locking device (70, 80) according to any of claims 5 or 6,
**characterized in that** the wedge surfaces (76) are designed such that they are elastically flexibly deflected when engaging the brake portion (30) and during further movement in the locking direction (38).

8. Locking device (70, 80) according to claim 7, **characterized in that** have a recess (78) for implementing a flexure bearing on the side facing away from the respective wedge surfaces (76).

9. Locking device (10, 70, 80) according to any of the preceding claims,
**characterized in that** two brake elements (34) are provided, which are arranged point-symmetrically with respect to the axis of rotation (24) or mirror-symmetrically with respect to a plane extending perpendicularly to the locking direction.

10. Locking device (10, 70, 80) according to any of the preceding claims,
**characterized in that** at least one brake piston (46, 48) and at least one spring element (58) interacting with the brake piston (46, 48) are provided, the brake element (34) moving from the release position into the locking position due to the spring force of the spring element (58), and the at least one brake piston (46, 48) delimiting a pressure chamber (52, 54) in such a way that, when the pressure chamber (52, 54) is pressurized, the brake element (34) is forced from the locking position into the release position counter to the spring force of the spring element (70).

11. Locking device (10, 70, 80) according to claim 10, **characterized in that** a first brake piston (48) and a second brake piston (50) are arranged on a piston rod (60), each of which brake pistons delimit a pressure chamber (52, 54), **in that** the second brake piston (50) faces the spring element (58) and the first brake piston (48) faces away from the spring element (58), **and in that** a partition wall (62) delimiting the pressure chamber (54) of the second piston (50) is provided between the brake pistons (48, 50).

12. Locking device (10, 70, 80) according to claim 10 or 11,
**characterized in that** the partition wall (62) is supported on a housing stop (64) on the side facing away from the second brake piston (50).

13. Gripping or clamping apparatus (12) comprising a locking device (10, 70, 80) according to any of the preceding claims.

14. Gripping or clamping apparatus (12) according to claim 13,
**characterized in that** two sliding jaws (14) that can be moved toward and away from one another are provided, the sliding jaws (14) each being motion-coupled to at least one working piston (16) delimiting a working pressure chamber, the working pistons (16) each providing a coupling portion (20) which is motion-coupled to a coupling member (22, 26) which is rotatably arranged about an axis of rotation (24), the coupling member (22) of the gripping or clamping apparatus (12) simultaneously forming or being rotationally coupled to the coupling member (26) of the locking device.

## Revendications

1. Système d'immobilisation (10, 70, 80) d'un dispositif de préhension ou de serrage (12) présentant deux mâchoires de base (14) pouvant être rapprochées et éloignées l'une de l'autre, avec un organe de couplage (26) couplé en mouvement ou pouvant être couplé en mouvement avec les mâchoires de base (14) et disposé de manière à pouvoir tourner autour d'un axe de rotation (24),
dans lequel l'organe de couplage (26) présente sur sa surface d'enveloppe une section de freinage (30), et avec au moins un élément de freinage (34) qui, pour immobiliser l'organe de couplage (26), peut être déplacé d'une position de libération dans une position d'immobilisation le long d'une direction d'immobilisation (38) s'étendant perpendiculairement à l'axe de rotation (24), **caractérisé en ce que** l'élément de freinage (34) agit tangentiellement sur la section de freinage (30) lors du déplacement dans la position d'immobilisation.

2. Système d'immobilisation (10) selon la revendication 1, **caractérisé en ce que** la section de freinage (30) est réalisée sous la forme d'un pignon (32) et **en ce que** l'élément de freinage (34) présente une section de crémaillère (36) coopérant avec le pignon (32) dans la position d'immobilisation et qui agit tangentiellement sur le pignon (32).

3. Système d'immobilisation (10) selon la revendication 2, **caractérisé en ce que** deux sections de crémaillère (36) sont prévues et **en ce que** le pignon (32) présente un nombre impair de dents qui est choisi de telle sorte qu'à chaque fois une seule des deux sections de crémaillère (36) peut venir en contact avec une tête de dent (44) du pignon (32).

4. Système d'immobilisation (70, 80) selon la revendication 1, **caractérisé en ce que** la section de freinage (30) est réalisée sous la forme d'une surface d'enveloppe (72) à symétrie de révolution et **en ce que** l'élément de freinage (34) agit tangentiellement sur la surface d'enveloppe (72) dans la position d'immobilisation.

5. Système d'immobilisation (10, 70, 80) selon la revendication 1 ou 4, **caractérisé en ce que** l'élément de freinage (34) est réalisé sous la forme d'un doigt cunéiforme (74) avec une surface cunéiforme (76) s'étendant obliquement par rapport à la direction d'immobilisation (38) et agissant tangentiellement contre la section de freinage (30) dans la position d'immobilisation.

6. Système d'immobilisation (70, 80) selon la revendication 5, **caractérisé en ce que** l'élément de freinage (34) est réalisé sous la forme d'une fourche cunéiforme (82) avec deux surfaces cunéiformes (76) s'étendant obliquement par rapport à la direction d'immobilisation (38) et agissant tangentiellement contre la section de freinage (30) dans la position d'immobilisation.

7. Système d'immobilisation (70, 80) selon l'une quelconque des revendications 5 ou 6, **caractérisé en ce que** les surfaces cunéiformes (76) sont réalisées de telle sorte qu'elles sont déviées élastiquement lorsqu'elles agissent sur la section de freinage (30) et lorsqu'elles continuent à se déplacer le long de la direction d'immobilisation (38).

8. Système d'immobilisation (70, 80) selon la revendication 7, **caractérisé en ce que** sur le côté opposé aux surfaces cunéiforme (76) respectives présente un évidement (78) pour la réalisation d'une articulation à corps solide.

9. Système d'immobilisation (10, 70, 80) selon l'une quelconque des revendications précédentes, **caractérisé en ce que** deux éléments de freinage (34) sont prévus, qui sont disposés avec une symétrie ponctuelle par rapport à l'axe de rotation (24) ou avec une symétrie spéculaire par rapport à un plan s'étendant perpendiculairement à la direction d'immobilisation.

10. Système d'immobilisation (10, 70, 80) selon l'une quelconque des revendications précédentes, **caractérisé en ce qu'**au moins un piston de frein (46, 48) et au moins un élément de ressort (58) coopérant avec le piston de frein (46, 48) est prévu, dans lequel le déplacement de l'élément de frein (34) à partir de la position de libération dans la position d'immobilisation s'effectue en raison de la force élastique de l'élément de ressort (58), et dans lequel l'au moins un piston de frein (46, 48) délimite une chambre de pression (52, 54) de telle sorte que, lorsque la chambre de pression (52, 54) est soumise à une pression, l'élément de frein (34) est poussé à partir de la position d'immobilisation dans la position de libération à l'encontre de la force élastique de l'élément de ressort (70).

11. Système d'immobilisation (10, 70, 80) selon la revendication 10, **caractérisé en ce que** sur une tige de piston (60) sont disposés un premier piston de frein (48) et un deuxième piston de frein (50), qui délimitent chacun une chambre de pression (52, 54), **en ce que** le deuxième piston de frein (50) est tourné vers l'élément de ressort (58) et le premier piston de frein (48) est opposé à l'élément de ressort (58), et **en ce qu'**une paroi intermédiaire (62) délimitant la chambre de pression (54) du deuxième piston (50) est prévue entre les pistons de frein (48, 50).

12. Système d'immobilisation (10, 70, 80) selon la revendication 10 ou 11, **caractérisé en ce que** la paroi intermédiaire (62) s'appuie au niveau d'une butée de boîtier (64) sur le côté opposé au deuxième piston de frein (50).

13. Dispositif de préhension ou de serrage (12) comprenant un système d'immobilisation (10, 70, 80) selon l'une quelconque des revendications précédentes.

14. Dispositif de préhension ou de serrage (12) selon la revendication 13, **caractérisé en ce que** deux mâchoires de base (14) pouvant être rapprochées et éloignées l'une de l'autre sont prévues, dans lequel les mâchoires de base (14) sont couplées en mouvement chacune à au moins un piston de travail (16) délimitant une chambre de pression de travail, dans lequel les pistons de travail (16) prévoient chacun une section de couplage (20) qui est couplée en mouvement à un organe de couplage (22, 26) disposé de manière à pouvoir tourner autour d'un axe de rotation (24), dans lequel l'organe de couplage (22) du dispositif de préhension ou de serrage (12) forme en même temps l'organe de couplage (26) du système d'immobilisation ou est couplé en rotation avec celui-ci.
